# EUROPEAN PATENT APPLICATION

(11) **EP 4 071 355 A1**
(43) Date of publication of application: **12.10.2022**
(21) Application number: 21167636.6
(22) Date of filing: 09.04.2021
(51) Int. Cl.: F03D 9/19, F03D 7/02

(54) **CONTROL OF A WIND TURBINE HAVING AN ELECTROLYZER**

(71) Applicant: Siemens Gamesa Renewable Energy A/S, 7330 Brande (DK)
(72) Inventor: Egedal, Per, 7400 Herning (DK); Hoegh, Gustav, 7100 Vejle (DK)
(74) Representative: SGRE-Association

(57) **Abstract**

It is described a method of controlling a wind turbine (1) having a generator system (2) coupled to an electrolyzer (3) for producing H2 from water, the method comprising: identifying a characteristic (30) of a load situation; operating the electrolyzer (3) at a load (24) and/or H2-output above a respective nominal rated value (25) depending on the characteristic of a load situation; monitoring the state (12) of the electrolyzer; and operating the electrolyzer (3) at a load (23) and/or H2-output not above the nominal value (25), if at least one state parameter is above a threshold.

## Description

### Field of invention

The present invention relates to a method and to an arrangement of controlling a wind turbine having a generator system coupled to an electrolyzer for producing H2 from water. Further, the present invention relates to a wind turbine comprising the arrangement and further comprising a generator and an electrolyzer.

### Art Background

Conventionally, a wind turbine may regulate the rotational speed of the rotor at which plural rotor blades are connected by adjusting the power production and/or the blade pitch angle. If a wind gust occurs, the power production may conventionally be increased to maximum power production and the rotor blades may be pitched to limit the increase in rotor speed. Thereby, the power output is often limited by the power converter system, transformers, site infrastructure (cables), maximum allowable site power production, grid requirements, etc. All these factors may conventionally limit the maximum peak power production. The increased power production may increase the counter-torque, thereby better balancing the torque generated from the wind. The limits may also cause a reduction of mean power during operating in a turbulent wind environment.

Conventionally, the wind turbines may have been structurally designed taking into account the limitation on the power production. Thereby, the power curves (expected power production versus wind speed) may have been slightly lowered (less power) to account for the power loss due to turbulence. Thereby, the efficiency of the wind turbine may be decreased in conventional systems.

Thus, there may be a need for a method and a corresponding arrangement of controlling a wind turbine having a generator system coupled to an electrolyzer for producing H2 from water, wherein efficiency of the wind turbine is increased while ensuring that components of the wind turbine, in particular the electrolyzer, is not damaged during operation.

### Summary of the Invention

This need may be met by the subject matter according to the independent claims. Advantageous embodiments of the present invention are described by the dependent claims.

According to an embodiment of the present invention it is provided a method of controlling a wind turbine having a generator system coupled to an electrolyzer for producing H2 from water, the method comprising identifying a characteristic of a load situation; operating the electrolyzer at a load and/or H2-output above a respective nominal rated value depending on the characteristic of a load situation; monitoring the state of the electrolyzer; and operating the electrolyzer at a load and/or H2-output not above the nominal value, if at least one state parameter is above a threshold.

The method may be implemented in software and/or hardware. The method may be performed by a module or a portion of a wind turbine controller. The wind turbine may be disconnected from the utility grid. The wind turbine may be an offshore wind turbine.

The electrolyzer may be supplied with (in particular purified) seawater which may then be electrolyzed by applying sufficient electrical power to the electrolyzer. The electrolyzer may comprise two DC electrodes which, upon power supply, electrolyze the water to produce H2 and O2 from water. The wind turbine may be erected on a sea platform and may or may not comprise a tank for holding produced H2. In embodiments, a pipe for conveying H2 may be provided between the wind turbine and another platform station or an onshore station for conveying the produced H2 to the other platform or the onshore station or onshore tank.

The generator system may comprise a generator, for example permanent magnet synchronous machine or a doubly fed induction generator, for example, for producing AC power upon rotation of the rotor which is driven by the wind impacting on the rotor blades. The generator system may further comprise a converter coupled to the AC output terminals of the generator, wherein the converter is configured to convert the AC power to DC power. The converter may directly be connected to the electrolyzer in order to supply DC power to the electrolyzer.

The load situation may be characterized for example by a gust, in particular degree of gust, wind turbulence and/or wind speed and/or other environmental parameters. The load the wind turbine is subjected to may be higher than the nominal or rated load. The load situation may in particular relate to a transient load situation, which does not prolong or is not expected to prolong more than for example 2 minutes or 10 minutes or 30 minutes, for example. In other embodiments, the load situation may be expected to prolong a greater time duration. In particular, a load situation may be identified which allows to reduce some structural or mechanical or electric loading, when the electrolyzer is operated above a respective nominal or rated value, in particular defining a nominal capacity or capability or rated capacity or capability, in particular a rated steady state capability. The nominal and/or rated value of the load of the electrolyzer may be associated with a load which the electrolyzer may be or over a steady state be subjected to. E.g. the nominal load of the electrolyzer may be the maximum load the electrolyzer is designed for for continuous operation. In other embodiments, the nominal or rated value of the load may be associated with or may be related with the load which may be applicable to the electrolyzer over a particular time duration without damaging the electrolyzer.

In particular, the load situation where the method is applicable, may be a load situation, which may allow to reduce some loading of one or more wind turbine components other than the electrolyzer, by operating the electrolyzer above (e.g. between 5% and 20% above) the nominal rated value of the load and/or the H2-output. For operating the electrolyzer at a load and/or an H2-output above the respective nominal rated value, for example electric power may be supplied to the electrolyzer which may be (e.g. between 5% and 20%) above the nominal rated value of the supply power. Alternatively or additionally, also (for example purified) seawater may be supplied to the electrolyzer (e.g. between 5% and 20%) above a nominal rated value of seawater supply.

According to an embodiment of the present invention a nominal temperature and/or pressure and/or other operation parameters (in particular for continuous operation) of the electrolyzer may be exceeded, in particular by a predetermined amount and/or temporarily over a predetermined duration.

Monitoring the state of the electrolyzer may comprise to measure one or more operational parameters, like temperature and/or pressure of the electrolyzer or a portion of the electrolyzer, measuring for example the amount of supply power, the amount of supply water, etc. The state parameter may for example comprise the temperature and/or the pressure and/or power supply and/or water supply of the electrolyzer. If at least one (or all) state parameter stays below the respective state parameter threshold, the electrolyzer may be continued to be operated at a load and/or H2-output above the respective nominal or rated value. When the electrolyzer is operated at a load and/or H2-output above the respective nominal and/or rated value, the efficiency of the wind turbine may be increased, in particular more H2 may be generated compared to the situation, where the electrolyzer is operated at a load corresponding to the respective nominal rated value or at a load below the respective nominal rated value.

Embodiments of the present invention provide a method and a corresponding arrangement, wherein the power converter and the electrolyzer may be designed in a way where the rated power is lower than a peak power. For example, a load situation may be determined, where an increase of the torque can or may reduce a loading based for example on measured speed, thrust, measured/estimated states, etc. Thereupon, the electrolyzer load may be increased above the nominal rated value. Further, the state of the electrolyzer may be monitored and the overloading of the electrolyzer may be stopped, if it is needed, for example because of an overtemperature. Thereby, other external limits imposed on the peak power production may be removed. Not having to design for these constraints may allow more flexibility for regulating the speed of the turbine and thereby provide a more optimal design.

According to an embodiment of the present invention, the load situation comprises an environmental overload situation, in particular including a wind gust and/or a wind turbulence. Thereby, typical environmental situations may be supported.

According to an embodiment of the present invention, the method further comprises determining, based on the characteristic of the load situation and/or at least one wind turbine operational parameter, whether operating the electrolyzer at a load and/or H2-output above a respective nominal rated value would cause at least one structural mechanical loading of a wind turbine component to be reduced.

Thereby, application of a physical/mathematical model and/or a simulation and/or evaluation of training data may be utilized or performed. Thereby, an appropriate response to the actual load situation may be determined, thereby preferably reducing at least one structural mechanical loading of a wind turbine component.

According to an embodiment of the present invention, by operating the electrolyzer at a load and/or H2-output above the nominal value, at least one structural mechanical loading of a wind turbine component, in particular drive train and/or bearing and/or rotor blade and/or tower, is reduced.

In particular by slightly overloading the electrolyzer (over at least a predefined time duration), a loading one or more other wind turbine components would be subjected to, may be reduced or even avoided.

According to an embodiment of the present invention, the characteristic of the load situation comprises a value of at least one of a wind speed; a wind turbulence; a wind gust; a thrust; a temperature. The characteristic of the load situation may be measured or estimated using one or more sensors, for example installed at or close to the wind turbine and/or using one or more processors or evaluation software. Thereby, typical load situations may be characterized and supported. For each individual load situation, as for example defined by plural values of the aforementioned parameters, appropriate response measures may be taken. For example, it may be determined to what degree (e.g. between 5% and 20%) the electrolyzer may be operated above the respective nominal rated operational values of for example the load and/or the H2-output. Depending on the different values of the state and/or the load situation parameters, the amount of overloading of the electrolyzer may be determined and/or also the possible load reduction of one or more components of the wind turbine may be determined, when the electrolyzer is operated at the respective overload. Thereby, an optimum of overloading the electrolyzer and reducing loads of one or more wind turbine components may be determined.

According to an embodiment of the present invention, operating the electrolyzer at a load and/or H2-output above a nominal rated value comprises at least one of supplying power and/or current and/or water to the electrolyzer above a respective nominal or rated value; operating the electrolyzer at a pressure and/or temperature above a respective nominal or rated value.

The supply the power and/or the current and/or water (e.g. 5% to 20%) above the respective nominal or rated value may be performed either for one or more predetermined time durations and/or as a steady state operation. Thereby, the additional electrical power generated by the generator system upon being confronted with the load situation, may increase H2 production.

According to an embodiment of the present invention, the method further comprises increasing power output of the generator system above nominal rated value, in particular thereby keeping the generator torque substantially constant, wherein the generator system comprises a generator coupled to a AC-DC converter.

Increasing the power output may be achieved by for example increasing the rotational speed and/or increasing the generator torque. However, preferably, the generator torque may be kept constant, in order to keep the mechanical loading on the drive train components at or below an acceptable or rated level. Increasing the power output of the generator system may in particular involve to increase power output of the generator and also power output of the converter which is coupled to the generator. The increased power output may be utilized by the slightly overloaded electrolyzer to generate an increased amount per time of H2.

According to an embodiment of the present invention, by operating the electrolyzer at a load and/or H2-output above the nominal value, the rotor speed is substantially kept constant and/or the rotor acceleration is limited. The power output by the generator is related to the product of the rotational speed and the generator torque. Although, the rotor may be slightly accelerated by a wind gust, while the generator torque may substantially be kept constant, the rotor acceleration may be limited, in particular in dependence on one or more power rotational speed curves. Preferably, the generator torque may be kept constant or may be increased to reduce the rotational speed or reduce acceleration of the rotational speed.

According to an embodiment of the present invention, monitoring the state of the electrolyzer comprises measuring at least one state parameter comprising at least one of a temperature; a pressure; a water supply and/or throughput; a state of at least one electrode. Other state parameters may be measured or monitored additionally or alternatively. Thereby, accurate monitoring of the state of the electrolyzer may be enabled. When one or more values of one or more state parameters is close to or is reaching a respective limit value, operation of the electrolyzer at an overload may be stopped or at least the overload may be reduced.

According to an embodiment of the present invention, the method further comprises after identifying a characteristic of the load situation: supplying a portion of increased power output by the generator system to a local energy storage, in particular accumulator and/or battery, thereby enabling to restrict the load excess above the nominal rated value, the electrolyzer is subjected to.

When a portion of the increased power output by the generator is applied to a local energy storage, the degree or level of overload of the electrolyzer may be reduced, or even the electrolyzer may be operated not above the nominal or rated value of the load and/or the H2-output. Thereby, damage of the electrolyzer may be decreased or even avoided, while anyway improving H2 production.

It should be understood that features, individually or in any combination, disclosed, explained, provided or applied to a method of controlling a wind turbine having a generator system coupled to an electrolyzer for producing H2 from water, also, individually or in any combination, apply to an arrangement of controlling a wind turbine according to an embodiment of the present invention and vice versa.

According to an embodiment of the present invention it is provided an arrangement of controlling a wind turbine having a generator system coupled to an electrolyzer for producing H2 from water, the arrangement comprising: a load identification module adapted to identify a characteristic of a load situation; a control module adapted to operate the electrolyzer at a load and/or H2-output above a respective nominal rated value depending on the characteristic of a load situation; a monitoring module adapted to monitor the state of the electrolyzer; and wherein the control module is further adapted to operate the electrolyzer at a load and/or H2-output not above the nominal value, if at least one state parameter is above a threshold.

In other embodiments, the arrangement may have a different architecture, not necessarily including a load identification module, a control module, and a monitoring module. The functionality of the arrangement may be implemented in software and/or hardware, in particular a processor being arranged to execute for example a software program which may be loaded into a processor storage. The arrangement may or may not comprise one or more measurement sensors or estimation module. The arrangement may be configured to generate control signals for controlling the electrolyzer and/or the generator system, in particular the converter. The arrangement may also be configured to control an optional local energy storage. In particular, the output terminals of the converter may be connectable or connected to the electrolyzer as well as to a local energy storage. The arrangement may be configured to provide a portion of the power produced or output by the converter to the electrolyzer and another portion to the local energy storage. The control module may be adapted to operate the electrolyzer at the overload, by for example controlling the converter or a switching system to provide supply power to the electrolyzer which may be above a rated or nominal supply power value.

According to an embodiment it is provided a wind turbine, comprising: a generator system coupled to an electrolyzer for producing H2 from water; and an arrangement according to the preceding embodiment.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Embodiments of the present invention are now described with reference to the accompanying drawings. The invention is not restricted to the illustrated or described embodiments.
- Fig. 1: illustrates a graph for explaining an embodiment of a method for controlling a wind turbine according to an embodiment of the present invention; and
- Fig. 2: schematically illustrates a wind turbine according to an embodiment of the present invention including an arrangement of controlling a wind turbine according to an embodiment of the present invention.

### Detailed Description

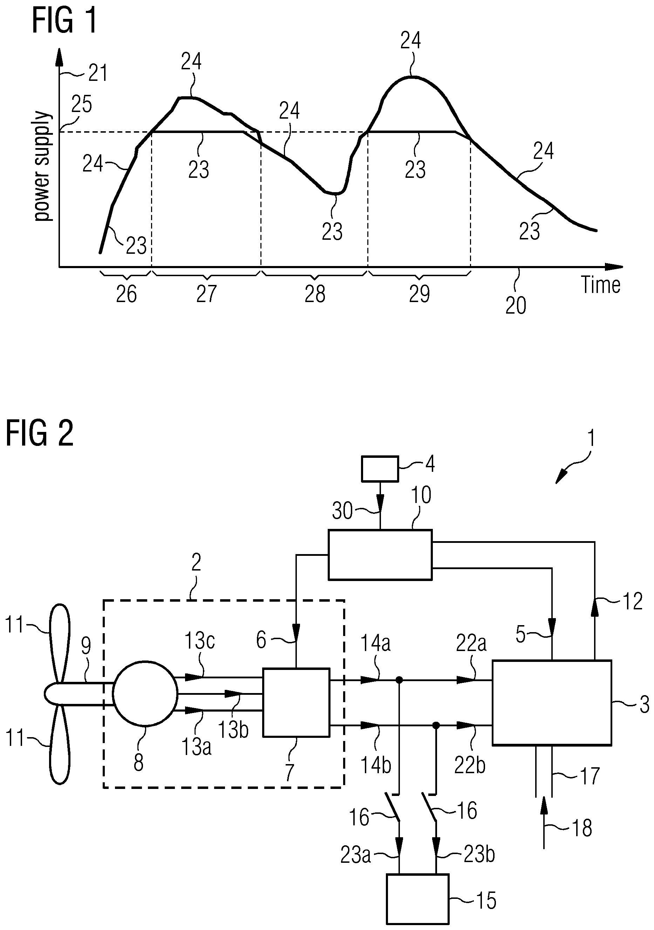

The wind turbine 1 schematically illustrated in **Fig. 2** comprises a generator system 2 and an electrolyzer 3 which is coupled to the generator system 2. Thereby, the generator system 2 comprises a generator 8 which is mechanically coupled to a rotation shaft 9 at which plural rotor blades 11 are connected. The wind turbine 1 may be an islanded wind turbine normally not connected to any utility grid.

Furthermore, the wind turbine 1 comprises an arrangement 10 for controlling the wind turbine 1 according to an embodiment of the present invention. The arrangement comprises a not in detail illustrated load identification module which is adapted to identify a characteristic of a load situation. In particular, the arrangement 10 may therefore receive wind condition measurement data (or load characteristic) 30 from a wind measurement module or system 4. The arrangement 10 further comprises a not in detail illustrated control module which is adapted to operate the electrolyzer 3 at a load and/or H2-output above a respective nominal rated value depending on the characteristic of the identified load situation. Thereby, the arrangement 10 is configured to provide control signals 5 to the electrolyzer 3 and/or to provide control signals 6 to a converter 7 comprised in the generator system 2.

The arrangement 10 further comprises a not in detail illustrated monitoring module adapted to monitor the state of the electrolyzer 3. For this purpose, the arrangement receives measurement signals 12 generated by one or more measurement sensors arranged close to or within the electrolyzer 3. The sensor measurement signals 12 may for example relate to a pressure and/or temperature and/or water throughput and/or actual power supply to the electrolyzer 3.

As can be seen in Fig. 2, the generator 8 generates AC power, in particular three-phase AC power 13a, 13b, 13c, and provides the AC power to the converter 7. The converter 7 is an AC-DC converter which generates from the supplied AC power an DC output power 14a, 14b at two DC terminals. The electrolyzer 3 receives the DC power 14a, 14b from the converter 7.

The embodiment illustrated in Fig. 2 further comprises a local energy storage 15, such as an accumulator and/or battery which connectable via switches 16 to the output terminals of the converter 7. Thereby, the power output by the converter 7 or at least a portion 23a,b of the power output by the converter 7 may be supplied to the local energy storage 15, another portion 22a,b may be supplied to the electrolyzer 3.

Via a input pipe 17, the electrolyzer 3 is supplied with input water 18. The arrangement 10 can also be adapted to change the flow rate of the input supply water 18 by not illustrated pumps and/or valves. Thus, the control signals 5 may also comprise control signals for one or more valves or pumps in order to adjust the flow rate of the supply input water 18.

**Fig. 1** illustrates in a coordinate system having an abscissa 20 indicating time and having an ordinate 21 indicating power supply (e.g 22a, 22b illustrated in Fig. 1) to the electrolyzer 3 according to a first curve 23 and according to a second curve 24 which may be derived according to embodiments of the present invention. Reference sign 25 labels a nominal or rated value of the power to be supplied to the electrolyzer 3.

In a time interval 26, the supply power to the electrolyzer 3 (i.e. according to curve 23) is below the rated or nominal threshold value 25. In a second time interval 27, a load situation occurs, where for example the wind turbulence increases and/or a gust occurs. According to a conventional control method, the supply power to the electrolyzer 3 is regulated according to the curve 23 which follows the threshold 25 of the supply power.

According to embodiments of the present invention, however, the supply power to the electrolyzer 3 may be according to the curve 24. The curve 24 is characterized in that the supply power is above the supply power threshold 25. Thereby, the electrolyzer is operated at a load above a respective nominal rated value, for example the rated or nominal or threshold value 25.

Alternatively or additionally to supplying the supply power 22a, 22b to the electrolyzer 3 above the respective rated or nominal value (e.g. according to curve 24), also the water supply 18 may be enhanced relative to a respective other nominal value or rated value.

In a third time interval 28, the increased turbulence or increased gust reduces such that the electrolyzer is supplied with supply power 28a, 28b below the rated or nominal value 25. In another embodiment, in the third time interval 28, the temperature of the electrolyzer is above a threshold, and the electrolyzer is supplied with supply power 28a, 28b below the rated or nominal value 25. In a fourth time interval 29, turbulence and/or gust increases again and the electrolyzer is again operated at a load above the respective nominal or rated value 25 of the supply power. Thereby, in the two time intervals 27 and 29, more H2 can be generated compared to the conventionally performed method.

The arrangement 10 is adapted to carry out a method of controlling a wind turbine according to an embodiment of the present invention. While the electrolyzer 3 is operated at a load and/or H2-output above a respective nominal rated value, the electrolyzer 3 is being monitored, involving reception of sensor measurement signals 12 of the arrangement 10. Thereby, the arrangement 10 would adjust the operation condition of the electrolyzer 3, if at least one state parameter of the electrolyzer 3 is above a threshold or if any evaluation logic demands to adjust the operation of the electrolyzer 3. If for example an evaluation logic considering one or more of the measurement values 12 determines, that the operation of the electrolyzer (above rated load) should be stopped or at least diminished, the arrangement 10 may provide control signals 5 to the electrolyzer and/or control signals 6 to the converter 7 in order to appropriately adjust the operation of the electrolyzer. Other wind turbine operating parameters may be changed as well.

Components of the wind turbine which may thereupon experience less load compared to the situation in which the electrolyzer is not operated at an overload, the components may for example include drive train components including a bearing, a gearbox which is optional, tower construction, rotor blades, etc. The wind measurement system 4 may for example be configured to measure wind speed, wind turbulence, wind gust, thrust, temperature, etc.

Embodiments of the present invention may for example be applied during a load situation where a gust occurs. At the onset of a gust, then the power extracted from the rotor may be increased significantly above the nominal/load term power target and thereby keep the rotor from accelerating or accelerate the rotor to a lower degree compared to a conventional method. This may reduce the structural loading of the wind turbine during gust events. The electrolyzer may have a rated/nominal current which may temporarily be increased during the gust. Similar, the electrolyzer may have a rated/maximum temperature that may be temporarily increase during gust events.

Embodiments of the present invention may also be applied in a load situation including wind turbulence or increased wind turbulence. The wind turbulence may result in the possible power production to vary. When there is a dip in wind speed, the power production may decrease and vice versa. Embodiments of the present invention contemplate the turbine operating just below rated wind speed. When the wind speed dips, power is lost, but when the wind speed increases, maximum power is soon reached and less power is gained compared to the power lost during dips. This would cause the mean to decrease. When, however, according to an embodiment of the present invention, the external power limitation is removed, the wind turbine may be free to produce as much H2 as possible with the available power from the wind. Thereby, the power curve 23 may reflect the power or H2 used with external factors imposing a maximum limit, as for example employed in a conventional system. The curve 24 indicates power output or H2-output as obtained according to embodiments of the present invention, which can be produced with the limits removed. The result is more power or more hydrogen being produced.

Removing the external factors limiting peak power and/or H2 production may increase the peak power extractor from the rotor. It may be used to limit the rotor speed during gusts thereby to reduce structural load on one or more wind turbine components. It may also be used to increase the H2 production during operation and turbulent wind but not limiting the short-term power.

Alternatively or additionally, the inverter or converter may be overdesigned and then a local storage (for example local storage 15 illustrated in Fig. 2 such as a supercapacitor) may be supplied with access supply power. Thereby, the output power may be smoothened and enabling the electrolyzer to be operated at a lower rating.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Method of controlling a wind turbine (1) having a generator system (2) coupled to an electrolyzer (3) for producing H2 from water, the method comprising:
identifying a characteristic (30) of a load situation;
operating the electrolyzer (3) at a load (24) and/or H2-output above a respective nominal rated value (25) depending on the characteristic of a load situation;
monitoring the state (12) of the electrolyzer; and
operating the electrolyzer (3) at a load (23) and/or H2-output not above the nominal value (25), if at least one state parameter is above a threshold.

2. Method according to the preceding claim, wherein the load situation comprises an environmental overload situation, in particular including a wind gust and/or a wind turbulence.

3. Method according to one of the preceding claims, further comprising:
determining, based on the characteristic of the load situation and/or at least one wind turbine operational parameter, whether operating the electrolyzer (3) at a load (24) and/or H2-output above a respective nominal rated value (25) would cause at least one structural mechanical loading of a wind turbine component to be reduced.

4. Method according to one of the preceding claims, wherein by operating the electrolyzer (3) at a load and/or H2-output above the nominal value, at least one structural mechanical loading of a wind turbine component, in particular drive train (9) and/or bearing and/or rotor blade (11) and/or tower, is reduced.

5. Method according to one of the preceding claims, the characteristic (30) of the load situation comprises a value of at least one of:
a wind speed;
a wind turbulence;
a wind gust;
a thrust;
a temperature.

6. Method according to one of the preceding claims, wherein operating the electrolyzer (3) at a load and/or H2-output above a nominal rated value comprises at least one of:
supplying power (24) and/or current and/or water to the electrolyzer above a respective nominal or rated value (25);
operating the electrolyzer at a pressure and/or temperature above a respective nominal or rated value.

7. Method according to one of the preceding claims, further comprising:
increasing power output (13a,b,c) of the generator system (2) above nominal rated value, in particular thereby keeping the generator torque substantially constant,
wherein the generator system comprises a generator (8) coupled to a AC-DC converter (7).

8. Method according to one of the preceding claims, wherein by operating the electrolyzer at a load and/or H2-output above the nominal value, the rotor speed is substantially kept constant and/or the rotor acceleration is limited.

9. Method according to one of the preceding claims, wherein monitoring the state of the electrolyzer comprises measuring at least one state parameter (12) comprising at least one of:
a temperature;
a pressure;
a water supply and/or throughput;
a state of at least one electrode.

10. Method according to one of the preceding claims, comprising, after identifying a characteristic of the load situation:
supplying a portion of increased power output (14a,b) by the generator system to a local energy storage (15), in particular accumulator and/or battery, thereby enabling to restrict the load excess above the nominal rated value, the electrolyzer (3) is subjected to.

11. Arrangement (10) of controlling a wind turbine (1) having a generator system (2) coupled to an electrolyzer (3) for producing H2 from water, the arrangement comprising:
a load identification module adapted to identify a characteristic (30) of a load situation;
a control module adapted to operate the electrolyzer (3) at a load (24) and/or H2-output above a respective nominal rated value (25) depending on the characteristic of a load situation;
a monitoring module adapted to monitor the state (12) of the electrolyzer (3); and
wherein the control module is further adapted to operate the electrolyzer at a load and/or H2-output not above the nominal value, if at least one state parameter is above a threshold.

12. Wind turbine (1), comprising:
a generator system (2) coupled to an electrolyzer (3) for producing H2 from water; and
an arrangement (10) according to the preceding claim.
